# EUROPÄISCHE PATENTANMELDUNG

(11) **EP 3 900 920 A1**
(43) Veröffentlichungstag der Anmeldung: **27.10.2021**
(21) Anmeldenummer: 21174412.3
(22) Anmeldetag: 03.03.2011
(51) Int. Cl.: B29C 70/38, B29C 70/74, B60B 5/02, B29B 11/16, B29L 31/32

(54) **VERFAHREN ZUR HERSTELLUNG EINES HOHLPROFILARTIGEN BAUTEILS**

(30) Priorität: 05.03.2010 DE 102010010512
(62) Teilanmeldung aus: 18000755.1
(71) Anmelder: ThyssenKrupp Carbon Components GmbH, 01723 Kesselsdorf (DE)
(72) Erfinder: Werner, Jens, 01640 Coswig (DE); Lepper, Martin, 01279 Dresden (DE); Hufenbach, Werner, 01324 Dresden (DE)
(74) Vertreter: thyssenkrupp Intellectual Property GmbH

(57) **Zusammenfassung**

Die Erfindung betrifft ein Verfahren zur Herstellung eines hohlprofilartigen Bauteils aus einem ersten, hohlprofilierten Bauelement (4) aus Faserverbundwerkstoff und einem zweiten Bauelement (8), wobei zur Vorfertigung des ersten Bauelements (4) eine Preform (4) dieses Bauelements (4) als Zwischenprodukt gebildet wird, welches durch Ablage eines Fasermaterials (5) auf einem die Kontur (3) des ersten, hohlprofilierten Bauelements (4) abbildenden Formwerkzeug (2) zu einem Fasergebilde entsprechend der Bauteilgeometrie des ersten Bauelements (4) geformt wird und anschließend durch Konsolidierung verfestigt wird. Während der Bildung der Preform (4) des ersten Bauelements wird die Preform (4) mit dem zweiten Bauelement (8) formschlüssig verbunden, wobei das zweite Bauelement (8) derart dimensioniert ist und von dem mehrteilig ausgebildeten Formwerkzeug (2, 6, 7) eingeschlossen angeordnet wird, **dass** beim Ablegen des Fasermaterials (5) **auf** dem die Kontur (3) des ersten Bauelements (4) abbildenden Formwerkzeug (2, 6, 7) und auf dem zweiten Bauelement (8) eine von der Umfangskontur des Formwerkzeugs (2, 6, 7) abgesetzte Kontur des zweiten Bauelements (8) zumindest teilweise umschlossen wird.

## Beschreibung

Die Erfindung betrifft ein Verfahren zur Herstellung eines hohlprofilartigen Bauteils, insbesondere zur Herstellung einer Radfelge zum Einsatz in der Kraftfahrzeugtechnik, bestehend aus einem ersten Bauelement aus Faserverbundwerkstoff und einem zweiten Bauelement, wobei in einer Vorfertigungsphase zur Vorfertigung des ersten Bauelements eine Preform dieses Bauelements durch Ablage eines Fasermaterials auf einem die Kontur des Bauelements abbildenden Formwerkzeug gebildet wird.

Es ist bereits bekannt, hohlprofilartige Bauteile, insbesondere Räder beziehungsweise Radfelgen, für Leichtbauanwendungen vollständig oder partiell aus Faserverbundwerkstoff zu fertigen.

Werden die Bauteile monolithisch (ganzheitlich) aus Faserverbundstoff hergestellt, wird auf einem Formwerkzeug, das das Bauteil abbildet, Fasermaterial manuell oder maschinell abgelegt, angeformt und zu einer Preform gebildet. Diese Preform ist ein der Bauteilgeometrie entsprechend geformtes Fasergebilde als Zwischenprodukt, welche anschließend durch Konsolidierung (Wärmebehandlung und /oder Imprägnierung mit Zusatzstoffen) verfestigt wird.

Eine derartige ganzheitliche Herstellung einer Radfelge aus Faserverbundwerkstoff ist aus der Druckschrift DE 10 2005 041 940 A1 bekannt. Diese Radfelge wird einteilig aus einem Geflechtschlauch hergestellt, wobei der Geflechtschlauch über Stützkerne oder zueinander fixierte Ringe, die die Form der Radfelge ergeben, gezogen und fixiert wird, anschließend der vorfixierte Schlauch zur Konsolidierung in ein Konsolidierungswerkzeug eingebracht und mit einem Matrixmaterial infiltriert wird. Damit werden mit einem einzigen Geflechtschlauch sowohl die Radscheibe als auch das Felgenbett mit den Felgenhörnern ausgebildet.

Resultierend aus der Geometrie der hohlprofilartigen Bauteile, beziehungsweise Radfelgen, ist eine monolithische (ganzheitliche) Herstellung aus Faserverbundwerkstoff nur mit sehr hohem manuellem Aufwand möglich. Außerdem ergeben sich aufgrund der eingeschränkten Möglichkeiten der Ausrichtung der Fasern erhebliche Nachteile hinsichtlich der mechanischen Beanspruchbarkeit solcher hohlprofilartigen Bauteile, beziehungsweise Radfelgen.

Entsprechend der Anforderungen des Leichtbaus und der Beanspruchbarkeit werden insbesondere Radfelgen, belastungsspezifisch in Einzelteilen vorgefertigt und anschließend zusammengefügt. Dabei können in großer Variation vorgefertigten Bauelemente aus Faserverbundstoff mit individueller Faserstruktur und -ausrichtung miteinander oder mit Bauelementen aus anderweitigem Material, wie Metall, kombiniert werden.

Die Druckschriften DE 41 23 459 C1, DE 101 45 630 A1 und DE 20 2005 004 399 U1 beschreiben jeweils die Fertigung eines Rades bzw. einer Radfelge aus Einzelteilen, die form-/kraft-/oder stoffschlüssig zusammengefügt werden.

Bei der Radfelge nach der Druckschrift DE 41 23 459 Cl und der DE 20 2005 004 399 U1 besteht das Felgenbettes aus Kunststoff und die Radschüssel bzw. innere Speicheneinheit aus Metall. Bei der Radfelge nach der Druckschrift DE 101 45 630 A1 sind die einzelnen Bestandteile des Rades bzw. der Radfelge jeweils aus Faserverbundwerkstoff mit unterschiedlicher Verteilung und Ausrichtung der Faserstränge belastungsgerecht vorgefertigt, bevor sie zusammengefügt werden. Nach einer Ausführungsform sind die Einzelteile jeweils aus unidirektionalen Endlosfasersträngen gefertigt, wobei das Felgenbett in einem Wickelprozess und die Radschüssel bzw. der Radstern im bekannten Resintransfer Moulding Verfahren hergestellt sind.

Die separate Vorfertigung der Bauelemente erfordert allerdings einen zusätzlichen Fügeprozess. Außerdem bilden die Verbindungen der Bauelemente bei hohen Belastungen des hohlprofilartigen Bauteils kritische Schwachstellen und sind insbesondere bei der zu erwartenden mechanischen Belastung einer Radfelge problematisch. Beispielsweise muss die Verbindung zwischen dem Felgenbett und der Radschüssel hohe Drehmomente, besonders beim Bremsvorgang, aufnehmen. An die Verbindung der Bauelemente sind daher große Anforderungen gestellt, so dass der zusätzliche Fügeprozess mit einem erheblichen technischen Aufwand verbunden ist, wie in den Druckschriften DE 20 2005 004 399 U1 und DE 20 2005 004 399 U1 ausführlich beschrieben ist.

Die aus Faserverbundwerkstoff vorgefertigten Bestandteile der Radfelge nach der Druckschrift DE 101 45 630 A1 sind miteinander verklebt. Allerdings belegt auch der Stand der Technik nach der Druckschrift DE 20 2005 004 399 U1, dass eine reine stoffliche Verbindung der Bauelemente für den Einsatz bei Radfelgen in der Kraftfahrzeugtechnik nicht zielführend ist, da die hiermit erreichbare mechanische Festigkeit und Temperaturbeständigkeit im Verbindungsbereich nicht ausreichen.

Der Erfindung liegt deshalb die Aufgabe zugrunde, ein Verfahren zur Herstellung eines hohlprofilartigen Bauteils, insbesondere zur Herstellung einer Radfelge, aus Bauelementen bereitzustellen, bei dem die Bauelemente unter Gewährleistung einer hohen Festigkeit mit geringem fertigungstechnischem Aufwand verbunden werden können.

Die Aufgabe wird erfindungsgemäß mit den Merkmalen des Patentanspruches 1 gelöst.

Vorteilhafte Ausgestaltungen und Weiterbildungen der Erfindung ergeben sich aus den abhängigen Patentansprüchen 2 bis 13, der nachfolgenden Beschreibung und den zugehörigen Zeichnungen.

Erfindungsgemäß wird vorgeschlagen, dass während der vorfertigungsphase zur Vorfertigung des ersten Bauelements aus Faserverbundwerkstoff die Preform des ersten Bauteils mit dem zweiten Bauelement formschlüssig verbunden wird.

Hierdurch werden bereits während dieser Vorfertigungsphase die Bauelemente zusammengefügt. Die hierbei erzeugte formschlüssige Verbindung genügt, um das Gefüge zu fixieren und als eigenständiges Zwischenprodukt für nachfolgende Fertigungsschritte bereitzustellen. Der zusätzliche Fertigungsschritt des nachträglichen Fügens der Bauelemente wird hierdurch eingespart. Die formschlüssige Verbindung ermöglicht überdies eine in vielen Variationen ausgeprägte, belastungsgerechte Verbindung von Bauelementen gleicher oder verschiedener Materialien. Neben der Herstellung von aus verschiedenen Faserverbundwerkstoffen bestehenden mehrteiligen Bauteilen bzw. Radfelgen erlaubt das erfindungsgemäße Verfahren auch die Herstellung von aus verschiedenen Materialien bestehenden Hybrid-Bauteilen bzw. Hybrid-Radfelgen.

In einer bevorzugten Ausführungsform des erfindungsgemäßen Verfahrens wird das zweite Bauelement derart dem Formwerkzeug beigeordnet und dimensioniert, dass beim Ablegen des Fasermaterials eine umlaufende Kontur des zweiten Bauelementes zumindest teilweise umschlossen wird. Bei dieser Ausführungsform wird die formschlüssige Verbindung mit besonders einfachen Mitteln erzeugt, nämlich durch Herausbildung einer von dem Formwerkzeug abgesetzten Kontur des beigeordneten zweiten Bauelementes, die während des Ablageprozesses des Fasermaterials auf dem Formwerkzeug einen Einschluss erfährt.

In einer weiteren bevorzugten Ausführungsform des erfindungsgemäßen Verfahrens wird nach der vorfertigungsphase die Preform konsolidiert und während der Konsolidierung mit dem zweiten Bauelement stoffschlüssig verbunden. Die Konsolidierung der Preform kann beispielsweise durch kurzzeitiges Aufschmelzen des Fasergeflechtes und Verharzen erfolgen. Durch die Aufschmelzung und Verharzung der Preform erfolgt gleichzeitig eine Verklebung der formschlüssig fixierten Bauelemente. So wird in demselben Fertigungsschritt neben der Verfestigung der Preform zugleich und unmittelbar die für die Stabilität des Bauteils erforderliche unlösbare Verbindung der Bauelemente realisiert. Auch hieraus ergeben sich erhebliche fertigungstechnische Einsparungen.

In vorteilhaften Ausführungsformen des Verfahrens kann die Preform durch Umflechten des Formwerkzeuges mittels Faserflechtfäden und/oder durch Bandwickeln von Fasersträngen um das Formwerkzeug und/oder durch Tapelegen von textilem flächigem Fasermaterial auf das Formwerkzeug gebildet werden, die bedarfsgerecht zur Herstellung des Bauteils angewendet werden können. Je nach dem Einsatzfall des herzustellenden Bauteils sorgen die verschiedenen Auflageprozesse für eine gute Anpassung des Fasermaterials an die Kontur des Formwerkzeuges und des mitgeführten Bauelementes.

Beim Umflechten werden das Formwerkzeug und das mitgeführte Bauelement als Flechtkern von Flechtfäden umflochten, die von einem den Flechtkern koaxial umlaufenden Flechtrahmen zugeführt werden. Der Flechtkern bewegt sich dazu axial vor und zurück, so dass hierbei die Ablage der Flechtfäden auf dem Flechtkern bzw. dem Formwerkzeug und dem mitgeführten Bauelement axial, in Richtung der Drehachse des Flechtrahmens, erfolgt. Die maschinelle Umflechtung des Formwerkzeuges ermöglicht mittels eines gesteuerten Flechtprozess die Strukturen des auf dem Formwerkzeug abgelegten Fasergeflechts individuell zu gestalten und somit Preformen (und folglich Bauelemente) mit örtlich differenzierter Beschaffenheit zu erzeugen.

Bei dem Bandwickel- und Tapelegeprozess wird hingegen ein strang- oder bandförmiges Fasermaterial tangential auf das sich drehonde Formwerkzeug und mitgeführte Bauelement appliziert, wodurch alternative Ablagestrukturen des Fasermaterials erzeugt werden können. Durch die Rotation der Einheit aus Formwerkzeug und Bauelement wird das Endlos-Fasermaterial von Vorratstrommeln straff auf das Formwerkzeug und das mitgeführte Bauelement aufgezogen. Das strang- oder bandförmige Fasermaterial kann vorkonfektionierte Fasergelege oder -gewebe sein. Das bandförmige Fasermaterial kann auch ein Fasergeflecht aus Flechtfäden sein, welches für eine besonders gute Anpassung an die Kontur des Formwerkzeuges und des mitgeführten Bauelementes sorgt.

In einer vorteilhaften Ausgestaltung des Verfahrens wird das Fasermaterial durch eine Stützvorrichtung an die Kontur des Formwerkzeuges und/oder an die Kontur des zweiten Bauelementes angedrückt. Damit kann eine kontrollierte Feinpositionierung der Ablage des Fasermaterials an die jeweiligen Konturen erfolgen, wodurch die Genauigkeit der Anformung an die vorgegebenen Konturen erhöht werden kann. Insbesondere kann hierdurch das korrekte Anlegen des Fasermaterials im Bereich der formschlüssigen Verbindung gesichert worden, was die Zuverlässigkeit der Verbindung erhöht.

Vorzugsweise weist die Stützvorrichtung drehbewegliche Führungselemente auf. Somit kann während der Rotation des Formwerkzeuges oder infolge einer koaxialen Rotation der Stützvorrichtung um das Formwerkzeug eine Relativbewegung der Führungselemente gegenüber dem Formwerkzeug erzeugt werden. Dadurch kann der Anformungs- und Anpressvorgang des Fasermaterials vereinfacht und beschleunigt worden.

Im Interesse der Leichtbauweise besteht das zweite Bauelement aus Faserverbundwerkstoff. Der Einsatz von Faserverbundwerkstoff ermöglicht es außerdem, spezifische, an die mechanischen und thermischen Belastungen angepasste Verstärkungsstrukturen im Bauteil vorzusehen. Das zweite Bauelement kann beispielsweise ein bereits konsolidiertes Faserverbundteil mit einer vom Faserverbundwerkstoff des ersten Bauelementes abweichender Faserstruktur sein.

Alternativ besteht das zweite Bauelement aus Metall, da es für bestimmte Einsatzfälle dem Bauteil eine besondere thermische Belastbarkeit und Festigkeit verleiht.

Beide Werkstoffarten sind insbesondere bei der Fertigung von Radfelgen von Bedeutung, je nach dem für welchen Zweck die Radfelgen vorgesehen sind. Beispielsweise kann bei einer Radfelge mit einem zu erwartenden intensiven Bremsbetrieb ein Bauelement aus Metall als Radscheibe vorgesehen sein und erfindungsgemäß mit einem Felgenbett aus Faserverbundwerkstoff verbunden werden, so dass die beim Bremsen erzeugte Wärme gut von der Bremsscheibe abgeleitet werden kann. Bei dieser Hybrid-Radfelge in Kombination aus einem Felgenbett aus Faserverbundwerkstoff und einer Radscheibe aus Metall bleibt die Leichtbauweise weitestgehend erhalten.

Vorzugsweise ist das in der Vorfertigungsphase mit der Preform zu verbindende zweite Bauelement ein Preformling aus Fasermaterial, welches noch zu verschmelzen ist und/oder mit Fasermatrixmaterial zu versetzen ist. Diese Halbzeuge eignen sich besonders für die erfindungsgemäße Verbundtechnologie zur Herstellung des mehrteiligen Bauteils. Ist ein solcher Preformling als zweites Bauelement vorgesehen, kann die Konsolidierung des Preformlings gemeinsam mit der Konsolidierung der Preform des ersten Bauelementes erfolgen, was zu weiteren fertigungstechnischen Einsparungen führt.

Die Variationsmöglichkeiten für die Herstellung des mehrteiligen Bauteils erhöhen sich auch durch ein ausgebildetes Formwerkzeug. Das mehrteilige Formwerkzeug kann, vorzugsweise unter Beiordnung oder Einschluss diverser Bauelemente, zu einer individuellen Werkzeugeinheit komplettiert werden, auf die anschließend zur Formgebung der Preform des ersten Bauelementes das Fasermaterial abgelegt wird.

In einer bevorzugten Ausführungsform des Verfahrens zur Herstellung einer Radfelge ist das erste Bauelement ein Felgenbett einer Radfelge und das zweite Bauelement eine Radscheibe, wobei während der vorfertigungsphase des Felgenbettes die Radscheibe zwischen zwei die Kontur des Felgenbettes abbildenden Teilwerkzeugen des Formwerkzeuges angeordnet ist.

An die Radscheibe sind gegenüber dem Felgenbett einer Radfelge besonders verschiedene Anforderungen gestellt. Durch das erfindungsgemäße Verfahren können Bauelemente mit höchst differenzierter Beschaffenheit, wie bei der Radscheibe und dem Felgenbett der Fall ist, mit einfachen Mitteln und mit geringem fertigungstechnischem Aufwand zuverlässig zusammengefügt werden.

In einer besonders vorteilhaften Ausführungsform ist das zweite Bauelement derart dimensioniert, dass es im Verhältnis zum Umfang des Formwerkzeuges einen radialen, vorzugsweise umlaufenden Überstand über dem Formwerkzeug und/oder eine radiale, vorzugsweise umlaufende Vertiefung gegenüber dem Formwerkzeug bildet.

Damit ergeben sich über den Umfang des Formwerkzeuges nach außen bzw. nach innen weisende Absätze zwischen dem Formwerkzeug und dem Bauelement, die während des Faserablageprozesses eine unlösbare Hinterschnittverbindung mit vergrößerten Kontaktflächen zwischen der Preform und dem zweiten Bauelement ergeben. Dies verleiht der formschlüssigen Verbindung einen sicheren Halt und erhöht die Haftung zwischen dem ersten und zweiten Bauelement, was sich besonders vorteilhaft auf die Beanspruchbarkeit der Gesamtstruktur der gefügten Preform bzw. des fertig gestellten Bauteils auswirkt.

Die Konsolidierung der Preform und/oder des Preformlings mittels einer Injektion, vorzugsweise mittels Harzinjektion, intensiviert zugleich den strukturellen wie auch den verbindenden Stoffschluss, was folglich die Wirtschaftlichkeit und Qualität der Bauteilfertigung, insbesondere der Fertigung der Radfelge, verbessert.

Zudem ist es vorteilhaft, wenn bei der Konsolidierung der Preform und/oder des Preformlings ein Gegenformwerkzeug eingesetzt wird. Das Gegenformwerkzeug, welches die äußere Kontur des ersten Bauelementes der Preform abbildet, unterstützt das korrekte Anlegen und Fixieren des Fasermaterials auf dem Formwerkzeug und dem beigeordneten Bauelement während der Konsolidierung. Insbesondere kann hierdurch das korrekte Anlegen des Fasermaterials im Bereich der formschlüssigen Verbindung gesichert werden.

Nachstehend wird das erfindungsgemäße Verfahren anhand eines Ausführungsbeispiels näher erläutert. Die zugehörigen Zeichnungen zeigen in einer schematischen Darstellung in
- Fig. 1: einen Ausschnitt einer Bandwickelanordnung mit einem zweiteiligem Formwerkzeug eines Felgenbettes einer Radfelge und einem zwischenliegendem Preformling einer Radscheibe der Radfelge in einer Seiten- und Schnittansicht,
- Fig. 2a: eine Detailansicht X der Werkzeugeinheit nach Fig. 1 in einer ersten Variante der Verbindung der Preformlings der Radscheibe mit der Preform des Felgenbettes,
- Fig. 2b: eine Detailansicht X der Werkzeugeinheit nach Fig. 1 in einer zweiten Variante der Verbindung eines Preformlings der Radscheibe mit der Preform des Felgenbettes,
- Fig. 2c: eine Detailansicht X der Werkzeugeinheit nach Fig. 1 in einer dritten Variante der Verbindung eines Preformlings der Radscheibe mit der Preform des Felgenbettes
- Fig. 3: eine stilisierte Ansicht eines zweiteiligen Formwerkzeuges mit einem Preformling einer Radscheibe in einer ersten Herstellungsphase der Radfelge,
- Fig. 4: Ansicht der Werkzeugeinheit nach Fig. 3 in einer zweiten Herstellungsphase der Radfelge,
- Fig. 5: Ansicht der Werkzeugeinheit nach Fig. 3 in einer dritten Herstellungsphase der Radfelge,
- Fig. 6: Ansicht der Werkzeugeinheit nach Fig. 3 in einer vierten Herstellungsphase der Radfelge,
- Fig. 7: Ansicht der Werkzeugeinheit nach Fig. 3 in einer fünften Herstellungsphase der Radfelge,
- Fig. 8: stilisierte Ansicht einer gefügten Preform der Radfelge in einer sechsten Herstellungsphase der Radfelge.

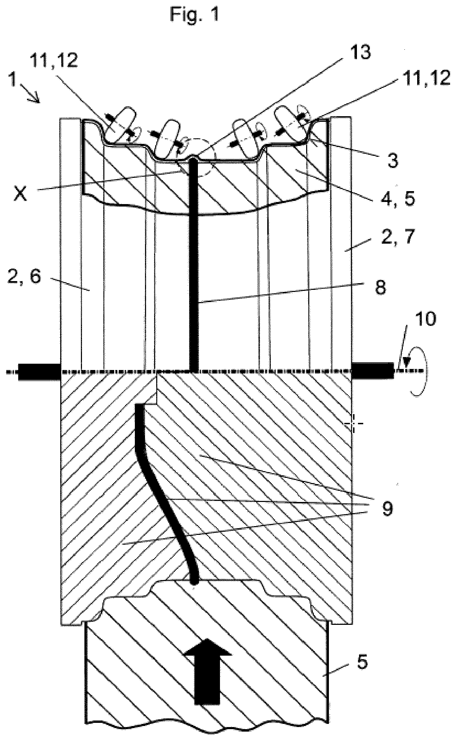

Fig. 1 zeigt einen Ausschnitt einer Bandwickelanordnung 1 mit einem Formwerkzeug 2, das an seinem Umfang die Kontur 3 eines Felgenbettes einer Radfelge abbildet. Zur Herstellung einer Preform 4 des Felgenbettes aus Faserverbundwerkstoff wird ein textiles flächiges Fasermaterial 5 auf das Formwerkzeug 2 aufgewickelt.

Das Formwerkzeug 2 besteht aus zwei Teilwerkzeugen 6, 7 zwischen denen ein Preformling 8 aus strukturverstärkten TFP-Fasergelege (TFP-TAILORED FIBER PLACEMENT) für die Fertigung einer Radscheibe angeordnet ist. Diese Anordnung aus Teilwerkzeugen 6, 7 und zwischengelagerten Preformling 8 bildet eine Werkzeugeinheit 9 der Bandwickelanordnung 1.

Durch Rotation der Werkzeugeinheit 9 um eine Rotationsachse 10 wird das Endlos-Fasermaterial 5 von einer nicht dargestellten Vorratstrommel straff auf das Formwerkzeug 2 und den mitgeführten Preformling 8 aufgewickelt. Das bandförmige Fasermaterial 5 ist in diesem Ausführungsbeispiel ein vorkonfektioniertes Fasergelege.

Bei der Umwicklung der Werkzeugeinheit 9 mit dem bandförmigen Fasermaterial 5 wird dieses formschlüssig an der Umfangsfläche des Formwerkzeuges 2 und der Umfangsfläche des Preformlings 8 angelegt und bildet so die Preform 4 des Felgenbettes.

Das Fasermaterial 5 wird mittels einer stationären Stützvorrichtung 11 mit Andruckrollen 12 zusätzlich geführt und entsprechend der umlaufenden Kontur des Formwerkzeuges 2 auf diesem fixiert. Die Andruckrollen 12 sind jeweils auf einen Übergang der Umfangskontur des Formwerkzeuges 2 ausgerichtet. Während der Rotation des Formwerkzeuges 2 um die Rotationsachse 10 wird in einer Relativbewegung der Andruckrollen 12 gegenüber dem Formwerkzeug 2 das Fasermaterial 5 entlang der Umfangskontur des Formwerkzeuges 2 angedrückt.

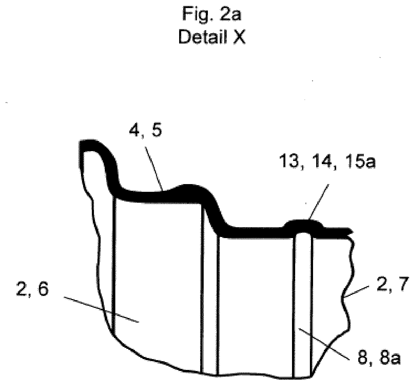

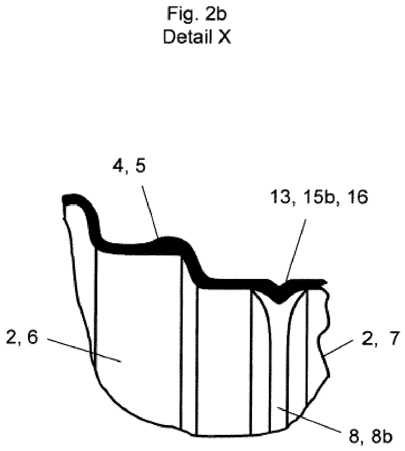

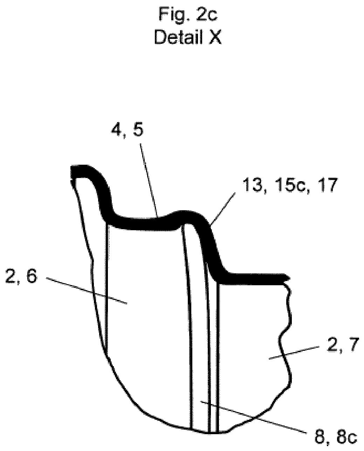

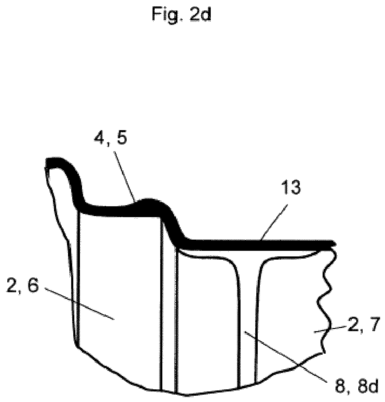

Das gestrichelt eingekreiste Detail X in Fig. 1 zeigt eine umlaufende Verbindungsstelle 13 der Preform 4 mit dem Preformling 8, die in Fig. 2a in einem vergrößerten Auszug der Werkzeugeinheit 9 wiedergegeben ist. Die Fign. 2b und 2c zeigen alternative Anbindungsvarianten zur Verbindungsstelle 13 nach Fig. 2a. Die Verbindungsstelle 13 in Fig. 2a wird durch einen Preformling 8a gebildet, dessen umlaufender Rand einen radialen, umlaufenden Überstand 14 über das Formwerkzeug 2, respektive über dessen beide Teilwerkzeuge 6, 7 aufweist, so dass eine Hinterschnittverbindung 15a mit einer konvexen Ausformung des aufliegenden Fasermaterials 5 entlang der Kontur 3 des Felgenbettes entsteht. Fig. 2b zeigt einen Preformling 8b, dessen umlaufender Rand eine radiale, umlaufende Vertiefung 16 gegenüber dem Formwerkzeug 2, respektive über dessen beide Teilwerkzeuge 6, 7 aufweist, so dass eine Hinterschnittverbindung 15b mit einer konkaven Ausnehmung des aufliegenden Fasermaterials 5 entlang der Kontur 3 des Felgenbettes entsteht. Die Vertiefung 16 kann, wie in Fig. 2b gezeigt, beispielsweise durch Drapieren des umlaufenden Randes des Preformlings 8 erzeugt werden.

Fig. 2c zeigt einen Preformling 8c in Anbindung an einen radialen Übergang 17 der Kontur 3 des Felgenbettes zwischen einem Hochbett und einem Tiefbett. Hiermit ergibt sich eine Hinterschnittverbindung 15c mit seitlicher Anlage des Fasermaterials 5 an dem Preformling 8.

Das Anlegen des Fasermaterials 5 im Bereich der umlaufenden formschlüssigen Hinterschnittverbindungen 15a, 15b, 15c kann zusätzlich durch spezielle, auf die jeweilige Hinterschnittverbindung 15a, 15b, 15c ausgerichtete und angepasste Andruckrollen (nicht dargestellt) unterstützt und präzisiert werden.

Damit wird in der Vorfertigungsphase zur Herstellung der Preform 4 des Felgenbettes als ein Bauelement der Radfelge zugleich der Fügevorgang mit anderen Bauelementen (hier betreffend den Preformling 8 in seinen alternativen Ausprägungen 8a, 8b, 8c) integriert und beide Vorgänge fertigungstechnisch zu einem Fertigungsvorgang verknüpft. Die derart erzeugten und verbundenen Bauelemente bilden die zusammengesetzte Preform 18 der Radfelge.

Die Bauelemente werden während des Konsolidierungsprozesses in ihrem Kontaktbereich miteinander verschmolzen und verharzt und ergeben so die fertige Radfelge. Die Hinterschnittverbindungen 15a, 15b, 15c vergrößern dabei nicht nur den Formschluss zwischen der Preform 4 des Felgenbettes und dem Preformling 8a, 8b oder 8c sondern auch die für den Stoffschluss zur Verfügung gestellten Kontaktflächen. Dies ergibt eine hohe mechanische Beanspruchbarkeit der Gesamtstruktur der Preform 18 der Radfelge und der fertiggestellten Radfelge.

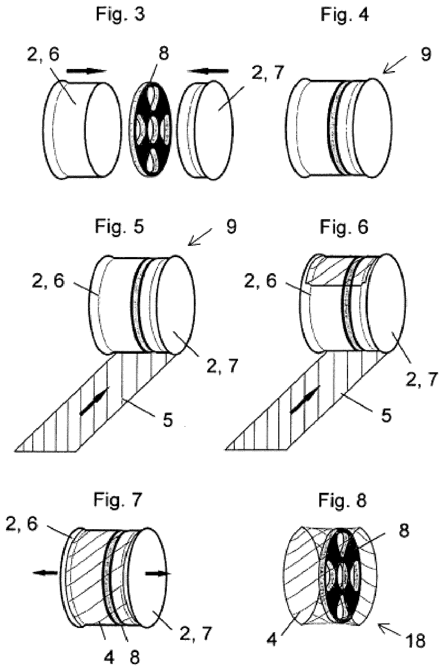

In den Figuren 3 bis 8 wird der Verlauf der erfindungsgemäßen Herstellung einer Radfelge in sechs Herstellungsphasen stilisiert dargestellt.

In einer ersten Herstellungsphase nach Fig. 3 werden die beiden Teilwerkzeuge 6, 7 des Formwerkzeuges 2, welche jeweils einen Teil der Kontur 3 des Felgenbettes der Radfelge abbilden, unter Zwischenlage des Preformlings 8 für die Radscheibe zur Werkzeugeinheit 9 zusammengefügt.

Gemäß Fig. 4 wird die komplettierte Werkzeugeinheit 9 für den maschinellen Bandwickelprozess bereitgestellt.

In einer dritten und vierten Herstellungsphase nach Fig. 5 und 6 wird die Werkzeugeinheit 9 in Rotation versetzt und dabei das bandförmige Fasermaterial 5 auf die Werkzeugeinheit 9 aufgezogen, wobei diese mehrfach mit dem Fasermaterial 5 umwickelt wird. Hierbei wird die Preform 4 des Felgenbettes gebildet und gleichzeitig mit dem Preformling 8 formschlüssig verbunden.

Fig. 7 zeigt die Herstellungsphase der Entformung der aus der Preform 4 und des Preformling 8 verbundenen Preform 18 der Radfelge. Die beiden Teilwerkzeuge 6, 7 des Formwerkzeuges 2 seitwärts in der jeweils gezeigten Pfeilrichtung entfernt.

In Fig. 8 ist die entformte Preform 18 der Radfelge dargestellt, welche die Preform 4 des Felgenbettes in Verbindung mit dem Preformling 8 der Radscheibe umfasst. Dieser Preform 18 bildet das Zwischenprodukt vor deren Konsolidierung auf dem Weg zur Fertigstellung der Radfelge. Der Vorgang der Konsolidierung kann alternativ auch vor der Entformung der Preform 18, also vor dem Entfernen der Teilwerkzeuge 6, 7 des Formwerkzeuges 2 in der Herstellungsphase nach Fig. 7 erfolgen.

Mit dem vorbeschriebenen, erfindungsgemäßen Verfahren kann die Herstellung der Radfelge durchgängig maschinell erfolgen, wobei das maschinelle Verbinden der Bauelemente 4, 8 der Radfelge zuverlässig und mit geringem fertigungstechnischem Aufwand erfolgt.

### Bezugszeichenliste

- 1: Bandwickelanordnung
- 2: Formwerkzeug
- 3: Kontur des Felgenbettes
- 4: Preform des ersten Bauelementes, Preform des Felgenbettes,
- 5: Fasermaterial
- 6: Teilwerkzeug des Formwerkzeuges
- 7: Teilwerkzeug des Formwerkzeuges
- 8: zweites Bauelement, Preformling der Radscheibe a, b, c
- 9: Werkzeugeinheit
- 10: Rotationsachse der Werkzeugeinheit
- 11: Stützvorrichtung
- 12: Führungselemente, Andruckrollen
- 13: Verbindungsstelle
- 14: umlaufender Überstand
- 15: Hinterschnittverbindung a, b, c
- 16: umlaufende Vertiefung
- 17: radialer Übergang der Kontur des Felgenbettes
- 18: Preform der Radfelge

## Patentansprüche

1. Verfahren zur Herstellung eines hohlprofilartigen Bauteils, insbesondere zur Herstellung einer Radfelge zum Einsatz in der Kraftfahrzeugtechnik, bestehend aus einem ersten, hohlprofilierten Bauelement (4) aus Faserverbundwerkstoff und einem zweiten Bauelement (8),
wobei zur Vorfertigung des ersten Bauelements (4) eine Preform (4) dieses Bauelements (4) als Zwischenprodukt gebildet wird, welches durch Ablage eines Fasermaterials (5) auf einem die Kontur (3) des ersten, hohlprofilierten Bauelements (4) abbildenden Formwerkzeug (2) zu einem Fasergebilde entsprechend der Bauteilgeometrie des ersten Bauelements **(4)** geformt wird, und das Zwischenprodukt anschließend durch Konsolidierung verfestigt wird, wobei während der Bildung der Preform (4) des ersten Bauelements die Preform (4) mit dem zweiten Bauelement (8) formschlüssig verbunden wird, wobei das zweite Bauelement (8) derart dimensioniert ist und von dem mehrteilig ausgebildeten Formwerkzeug (2, 6, 7) eingeschlossen angeordnet wird, dass beim Ablegen des Fasermaterials (5) auf dem die Kontur (3) des ersten Bauelements (4) abbildenden Formwerkzeug (2, 6, 7) und auf dem **zweiten** Bauelement (8) eine von der Umfangskontur des Formwerkzeugs (2, 6, 7) abgesetzte Kontur des zweiten Bauelements (8) zumindest teilweise umschlossen wird.

2. Verfahren nach Anspruch 1, **dadurch gekennzeichnet, dass** das zweite Bauelement(8) derart dimensioniert und angeordnet ist, dass es im Verhältnis zur Umfangskontur des Formwerkzeuges (2) einen radialen, vorzugsweise umlaufenden Überstand (14) über dem Formwerkzeug (2) und/oder eine radiale, vorzugsweise umlaufende Vertiefung (16) gegenüber dem Formwerkzeug (2) bildet.

3. Verfahren nach Anspruch 1 oder 2, **dadurch gekennzeichnet, dass** während der Konsolidierung der Preform (4) des ersten Bauelements die Preform (4) mit dem zweiten Bauelement(8) stoffschlüssig verbunden wird.

4. Verfahren nach einem der Ansprüche 1 bis 3, **dadurch gekennzeichnet, dass** die Preform (4) durch Umflechten des Formwerkzeuges (2) mittels Faserflechtfäden und/oder durch Bandwickeln von Fasersträngen Um das Formwerkzeug (2) und/oder durch Tapelegen von textilem flächigem Fasermaterial auf das Farmwerkzeug (2) gebildet wird.

5. Verfahren nach einem der Ansprüche 1 bis 4, **dadurch gekennzeichnet, dass** das Fasermaterial (5) durch eine Stützvorrichtung (11) an die Kontur des Formwerkzeuges (2) und/oder an die Kontur des zweiten Bauelementes (8) angedrückt wird.

6. Verfahren nach einem der Ansprüche 1 bis 5, **dadurch gekennzeichnet, dass** die Stützvorrichtung (11) drehbewegliche Führungselemente (12) aufweist.

7. Verfahren nach einem der Ansprüche 1 bis 6, **dadurch gekennzeichnet, dass** das zweite Bauelement (8) aus Faserverbundwerkstoff oder aus Metall besteht.

8. Verfahren nach einem der Ansprüche 1 bis 6, **dadurch gekennzeichnet, dass** das mit der Preform (4) zu verbindende zweite Bauelement (8) ein Preformling (8a, b, c) ist, der aus Fasermaterial besteht.

9. Verfahren nach einem der Ansprüche 1 bis 8, **dadurch gekennzeichnet, dass** das erste Bauelement (4) ein Felgenbett einer Radfelge ist.

10. Verfahren nach einem der Ansprüche 1 bis 9, **dadurch gekennzeichnet, dass** das zweite Bauelement (8) eine Radscheibe ist.

11. Verfahren nach Anspruch 10, **dadurch gekennzeichnet, dass** die mit der Preform (4) des Felgenbetts zu verbindende Radscheibe (8) zwischen zwei die Kontur (3) des Felgenbetts abbildenden Teilwerkzeugen (6, 7) des Formwerkzeuges(2) angeordnet ist.

12. Verfahren nach einem der Ansprüche 1 bis 11, **dadurch gekennzeichnet, dass** die Konsolidierung der Preform (4) und/oder des Preformlings (8a, b, c) mittels einer Injektion, vorzugsweise mittels Marzinjektion, erfolgt.

13. Verfahren nach einem der Ansprüche 1 bis 12, **dadurch gekennzeichnet, dass** bei der Konsolidierung der Preform (4) und/oder des Preformlings (8 a, b, c) ein Gegenformwerkzeug eingesetzt wird.
